(19) Europäisches Patentamt
European Patent Office
Office européen des brevets

(11) **EP 4 205 543 A1**

(12) **EUROPEAN PATENT APPLICATION**

(43) Date of publication:
05.07.2023 Bulletin 2023/27

(21) Application number: 21218358.6

(22) Date of filing: 30.12.2021

(51) International Patent Classification (IPC):
**A01K 97/00** (2006.01)      **A01K 97/02** (2006.01)
**G01S 15/96** (2006.01)

(52) Cooperative Patent Classification (CPC):
**A01K 97/02; A01K 97/00; G01S 7/53; G01S 15/96**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 28.12.2021  SE 2151630
28.12.2021  SE 2151629
28.12.2021  SE 2151628

(71) Applicant: **UAB Deeper**
**10312 Vilnius (LT)**

(72) Inventors:
• **Spelveris, Mindaugas**
  **10312 Vilnius (LT)**
• **Zelvys, Vytautas**
  **10312 Vilnius (LT)**

(74) Representative: **Zacco Sweden AB**
**P.O. Box 5581**
**Löjtnantsgatan 21**
**114 85 Stockholm (SE)**

(54) **BAIT DISTRIBUTION FOR FISHING**

(57)    The present disclosure relates to a method (200), a fishing sonar apparatus (2), a computer program carrier and a vessel (1) for scanning a body of water and distribution of bait. The method comprises obtaining (202) a first set of instructions comprising location data of a first location and sonar data associated with at least one sonar scan performed in the first location and transmitting (204) a signal, based on the first set of instructions, indicating a first type of bait (21a) to be dispensed in the first location (6), to a bait-dispensing module (16) of the fishing sonar apparatus (2).

FIG. 1

200

202 — Obtain a first set of instructions

204 — Transmit a signal to a bait-dispensing module

206 — Obtain a second set of instructions

Select a second type of bait

208

Predetermined criteria

205

FIG. 2a

**Description**

TECHNICAL FIELD

The present invention relates to distribution of bait for attracting fish. In particular, embodiments herein relate to a method and a fishing sonar apparatus, as well as a vessel comprising such a fishing sonar apparatus and a computer program carrier.

BACKGROUND

The recent surge in development of sonar devices for fishing applications has been an indicative of popularity and practicality of using such devices to increase the fishing yield and success rate of fishing expeditions. To this end, boats or vessels are equipped with sonar scanners capable of scanning underwater locations and illustrating a map of the underwater world with various resolutions. Further, castable fishing sonar devices have also been developed. Sonar devices are operated by employing ultra-sound signals usually generated by a transducer and by measuring ultra-sound signals, reflected from obstacles within the water.

In an example prior art document US20200363798, unmanned vehicles are remotely operated to perform various tasks such as navigation, sonar, radar, etc. in a marine environment. These unmanned vehicles are capable of gathering sonar data of a location and then transmitting the gathered sonar data to a device for display of the sonar data on a display of the device. These systems however, have the drawback that user is not presented with flexibility and control over the sonar data as well as lacking the capabilities of more accurate decision-making based on various real-life or predetermined scenarios. Thus, the chances of success for the fishing events are not enhanced noticeably by using prior art systems.

Therefore, there is a need in the field of sonar systems for fishing applications to develop more flexible, cost-effective, versatile and accurate sonar systems and methods, hence improving the overall user experience and increase accuracy in localization and attracting fish.

SUMMARY

It is therefore an object of the present disclosure to provide a fishing sonar apparatus for scanning a body of water for localization of fish, and distribution of bait for fish as well as a vessel comprising such a fishing sonar apparatus, a method and a computer program carrier, which alleviate all or at least some of the drawbacks of the presently known solutions. These and other objects are achieved by various aspects of the present disclosure as defined in the appended independent claims. The term exemplary or example is in the present context to be understood as serving as an instance, example or illustration.

According to a first aspect of the present disclosure there is provided a method performed by a fishing sonar apparatus for distribution of bait for fish. The method comprises obtaining a first set of instructions comprising location data of a first location and sonar data associated with at least one sonar scan performed in the first location. The method further comprises transmitting a signal, based on the first set of instructions, indicating a first type of bait to be dispensed in the first location, to a bait-dispensing module of the fishing sonar apparatus.

In some embodiments the first set of instructions may further comprise location data of one or more second location(s) being substantially comprised in the first location and sonar data associated with at least one sonar scan performed in the one or more second location(s). thus, the method may further comprise transmitting a signal, based on the first set of instructions, indicating the first type of bait to be dispensed in the one or more second location(s), to the bait-dispensing module of the fishing sonar apparatus.

In several embodiments, the method may further comprise obtaining a second set of instructions comprising one or more predefined criteria. Further, the method may comprise transmitting a signal, based on the first set of instructions and the second set of instructions, indicating the first type of bait to be dispensed in the one or more second location(s) if the sonar data associated with the one or more second location(s) comprising at least one characteristic of the one or more second location to be compared with the one or more criteria matches the one or more predefined criteria, to the bait-dispensing module of the fishing sonar apparatus.

In several exemplary embodiments the one or more predefined criteria may comprise a set of characteristics, comprising any one of a predefined shape, a predefined size, a predefined water depth, a predefined water depth alteration profile, a predefined sea-bottom profile, a predefined species of fish, a temperature parameter of the water, a salinity parameter of the water, and a thermocline depth parameter of the water.

The inventors have realized that by obtaining the sonar data of a scanned location e.g. the first location and extracting at least one characteristic of the first location from the obtained sonar data which can be compared with the predetermined characteristics comprised in the predetermined criteria, one or more second locations can be identified. The one or more second locations in the present context can be described as optimal or desired target locations that are suitable for fishing activities such as distribution of bait and/or capturing fish. By identified in the present context it is meant that the one or more second locations with matching characteristics with the predetermined characteristics are determined, discovered and marked e.g. on a map for further fishing activities. By identifying these best locations for fishing based on the sonar data and the one or more predefined criteria, the user is provided with the possibility of identifying the most desirable fishing spots in an area and thus avoid random selection of fishing spots based on only scanning results showing objects or fish in general, thus saving time and resources to find the desired types of fish. Further, the inventors have realized that by obtaining the sonar data associated with the first location and/or one or more second locations the user and/or the control unit of the fishing sonar apparatus e.g. in case of an autonomous vessel can make decisions to effectively dispense and distribute bait in the first location and/or the one or more second locations to attract fishes including targeted species of fishes, hence advantageously improving the yield and economics of fishing.

In some exemplary embodiments, the method may further comprise selecting, based on the first set of instructions and the second set of instructions, a second type of bait, which is different from the first type of bait. The method may further comprise transmitting a signal, based on the first set of instructions and the second set of instructions, indicating the first type of bait to be dispensed in one selected second location of the one or more second location(s) and the second type of bait to be dispensed in one other second location of the one or more second location(s), to the bait-dispensing module of the fishing sonar apparatus.

In several embodiments, obtaining the first and the second set of instructions may comprise retrieving the first and the second set of instructions from a memory of the fishing sonar apparatus and/or receiving from a wireless device, a wireless signal comprising the first and the second set of instructions.

In some exemplary embodiments, the method may further comprise receiving a signal from the wireless device, the signal comprising instructions from the wireless device for electing one second location of the one or more identified second location(s) and/or one other second location of the one or more identified second location(s). The method may further comprise electing the one second location of the one or more second location(s) and/or the one other second location of the one or more second location(s) based on the received instructions from the wireless device such that bait may be dispensed in the elected locations.

In several exemplary embodiments, the method may further comprise receiving instructions comprised in the signal received from the wireless device, wherein the instructions may further comprise instructions for selecting the first and/or second type of bait and/or an amount of the first and the second type of bait to be dispensed in the one elected second location of the one or more identified second location(s) and/or in the one other elected second location of the one or more identified second location(s).

According to a second aspect of the present disclosure there is provided a computer program carrier carrying one or more computer programs configured to be executed by one or more processors of a processing system comprised in a control unit, the one or more programs comprising instructions for performing the method according to any one of the embodiments of the method disclosed herein. Wherein the computer program carrier is one of an electronic signal, optical signal, radio signal or a (non-transitory) computer-readable storage medium.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect of the present disclosure, there is provided a computer program product comprising instructions which, when the program is executed by one or more processors of a processing system comprised in a control unit, causes the processing system to carry out the method according to any one of the embodiments of the method disclosed herein.

According to a further fourth aspect, there is provided a fishing sonar apparatus for distribution of bait for fish. The fishing sonar apparatus comprises a control unit and a bait-dispensing module, wherein the control unit is configured to obtain a first set of instructions comprising location data of a first location and sonar data associated with at least one sonar scan performed in the first location. The control unit is further configured to transmit a signal, based on the first set of instructions, indicating a first type of bait to be dispensed in the first location, to the bait-dispensing module of the fishing sonar apparatus.

According to yet another fifth aspect of the present disclosure, there is provided a vessel for scanning a body of water and distribution of bait for fish. The vessel comprising a perception system for monitoring a surrounding environment of the vessel such as the body of water, a localization system configured to monitor a geographical position and heading of the vessel and a fishing sonar apparatus according to the fourth aspect and various embodiments of the fourth aspect.

Further embodiments of the different aspects are defined in the dependent claims.

It is to be noted that all the embodiments, elements, features and advantages associated with the first aspect also analogously apply to the second, third, fourth and the fifth aspects of the present disclosure.

These and other features and advantages of the present disclosure will in the following be further clarified in the following detailed description.

BRIEF DESCRIPTION OF THE DRAWINGS

Further objects, features and advantages of embodiments of the disclosure will appear from the following detailed description, reference being made to the accompanying drawings. The drawings are not to scale.

Fig. 1 shows a schematic side view of a pool of water and a vessel configured to scan a body of water in accordance with some embodiments;

Figs. 2a-2c show schematic flowcharts illustrating a method in accordance with several embodiments;

Fig. 3 shows a schematic side view illustration of the vessel comprising a control unit in accordance with various embodiments.

DETAILED DESCRIPTION

In the following detailed description, some of the embodiments of the present disclosure will be described. However, those skilled in the art will appreciate that features of different embodiments are exchangeable among the embodiments and may be combined in various other ways, unless anything else is specifically indicated. The basics and conventional techniques in electronics, sensor systems, signal processing, data communication systems, telecommunication systems, and other components to carry out the disclosure are considered to be readily available to the person skilled in the art. The terms "first", "second" and the like as used herein, do not denote any order, quantity or importance, but rather are used to distinguish one element from another.

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

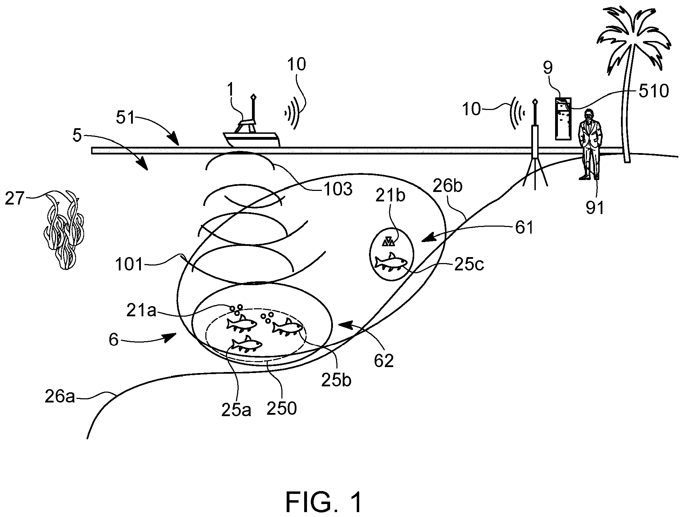

Fig. 1 shows a schematic drawing of a vessel 1 according to several embodiments and aspects. The vessel 1 comprises a fishing sonar apparatus 2 comprising a control unit 4 which is configured to carry out several embodiments of the method herein. The vessel 1 within the boundaries of the present disclosure is to be construed as any kind of watercraft suitable for and used for catching fish, such a boat, a fishing boat, sailboat, yacht, canoe, kayak, any kind of inflatable boat, belly-boats, non-powered or low-powered boats, etc. The vessel according to several embodiments maybe a remotely controlled vessel by a user 91 by means of a wireless device 9 and by wireless communication signals 10. The vessel 1, in several embodiments may additionally or alternatively be a semi- or fully-autonomous vessel.

In several aspects and embodiments, the fishing sonar apparatus 2 of the vessel 1 is configured for scanning a body of water 5. The fishing sonar apparatus is configured for localization of fish 25a, 25b, 25c in the body of water. The fishing sonar apparatus is further configured to distribute fish bait i.e. food for fish into the body of water to attract fish or certain species of fishes. By water, it is meant any one of fresh water or any aquatic environment such as seawater, ocean water, lake water, river water etc. that could be the habitat for aquatic life. By fish in the context of the present disclosure, it is meant any of numerous cold-blooded aquatic craniate vertebrates including the bony fishes.

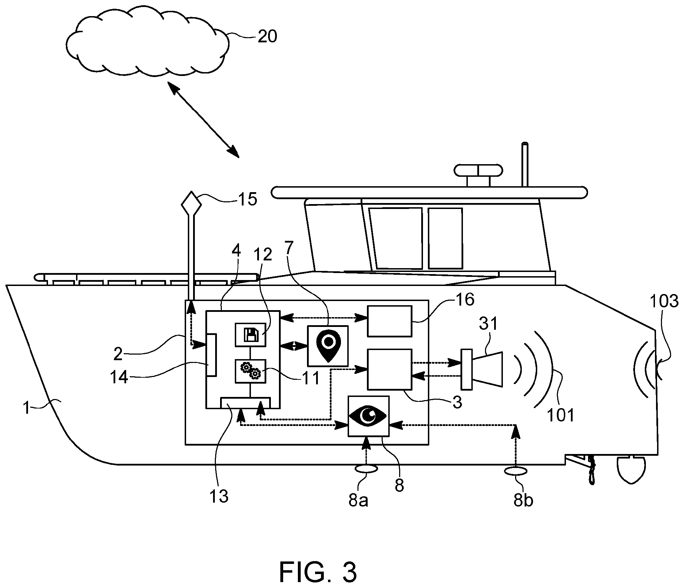

According to several embodiments and aspects, the vessel 1 (e.g. fishing sonar apparatus of the vessel or the vessel itself) may comprise a fishing sonar module 3 as shown in Fig. 3 configured to perform at least one sonar scan in the body of water 5. The vessel further comprises a bait-dispensing module 16 for dispensing bait for fish in the body of water. The vessel may further comprise one or more bait containers or compartments (not shown) loaded with different types of fish bait e.g. a first type 21a and/or a second type 21b of fish bait. Each type of bait may have a designated bait container. The bait containers may be comprised in and implemented as a part of the bait-dispensing module or additionally or alternatively be implemented separately in the vessel. The bait containers may be in communication with the bait-dispensing module such that the bait-dispensing module can send command signals to the containers to dispense bait in the water in accordance with several embodiments.

The control unit 4 is configured to obtain a first set of instructions comprising location data of a first location 6, as well as sonar data associated with at least one sonar scan performed in the first location. In several embodiments, the first set of instructions may further comprise location data of one or more second location(s) 61, 62 being substantially comprised in the first location 6 and sonar data associated with at least one sonar scan performed in the one or more second location(s). In several embodiments, the control unit is further configured to obtain a second set of instructions comprising one or more predefined (predetermined) criteria. In some embodiments, the first and/or second set of instructions may comprise instructions to dispense fish bait in the first and/or one or more second locations.

In several embodiments, the control unit is configured to access the sonar data associated with the first location and/or the one or more second locations from a memory 12 of the fishing sonar apparatus and/or from a wireless device 9. The sonar data may have been obtained by processing at least one sonar scans performed in the first and/or one or more second locations. The sonar scans may have been performed previously by the same vessel 1 or by another vessel. In some embodiments, the control unit 4 is configured to obtain the sonar data associated with the first and/or one or more second locations 61, 62 from an external network 20, such as a wireless network or a cloud network which may be in communication with the wireless device. The sonar data associated with the first and the one or more second locations may comprise at least one characteristic of the first location and/or one or more second locations to be compared with the one or more predefined criteria.

In several embodiments, the control unit 4 may be further configured to perform at least one sonar scan in the first location 6 by means of the sonar module 3 of the vessel 1. The sonar scanning of the locations may be performed prior to a bait-dispensing plant so as to identify the suitable locations for dispensing fish bait to attract fish. The sonar module 3 is configured to generate an impulse signal 101 to be emitted to the body of water. This signal is then emitted, by means of the emitter transducer 31 of the fishing sonar module 3 into the body of water. The transducer 31 of the sonar module 3 is further configured to receive a reflected phase-modulated impulse sonar signal 103 from the body of water. In this example, the received reflected sonar signal comprises a reflection of the emitted sonar signal being incident on at least one object such surrounded by the body of water. For instance, the reflected sonar signal received by the sonar module 3 may be reflected by at least one fish 25a, 25b, 25c. In the context of the present disclosure objects may comprise fish 25a, 25b, 25c, bottom 26 (e.g. different parts of the water bottom 26a, 26b) of the sea or lake, or underwater vegetation 27, etc.

The control unit 4 of vessel 1 may be configured to obtain the sonar scans performed by the sonar module 3 directly or via a dedicated sensor interface 13 in the vessel from the fishing sonar module 3. The obtained at least one sonar scan in the first location may include a set of sonar scans performed in the first location 6 under several angles of incidences of the transmitted sonar signal 101 towards the body of water 5, at different time points, under different time intervals, by moving the vessel or the sonar module and sweeping the area 6 or sub-areas 61, 62 comprised in the first area 6. Depending on the conditions, various sonar scan path-planning methods such as known bathymetry - Bayesian, unknown bathymetry - grid or fractal scan may be used. In other words, sonar scans of an area may be obtained by scanning that area in a variety of scan paths (i.e. planned routes for the movement of the vessel in the area to be scanned) to obtain as much information as possible. Thus, planning a route for scanning the area in some embodiments may comprise using grid search e.g. multi-resolution grid or quadtree-based curve or fractal curve. In some embodiments, random scan (usable for initial scanning as needed for Bayesian scanning) can be used. In several embodiments, Bayesian search (needs initial scans or known at least coarse bathymetry) can be employed.

When performing at least one sonar scan in the first location, the sonar module may also obtain at least one sonar scan in sub-locations (sub-areas) comprised in the first location e.g. in one or more second locations 61, 62 which are substantially comprised in the first location 6.

It is worth noting, that the scan resolution and the feature accuracy may depend on a scan cone base area i.e. cross-section of the scan cone. The cone base area depends on the sonar scan angle and the depth of the sea bottom. In short, the deeper the sea bottom, the more ambiguous are the features of the scanned area to be resolved from the sonar scans, because the sonar signal will be reflected from a greater area, compared to e.g. scans performed in shallow waters. For accurate scanning and feature acquisition, e.g. identification of depth alteration (e.g. small holes, or pits) narrower scan angles might be more advantageous to use. For an optimal scan to be performed, shortest possible path to cover the entire area under observation can be used. Further, the resolution of the scanning paths may be increased upon discovering an increase of feature detail level as will be explained further below.

The scanning may be performed including using linear or zig-zag scans. However, the inventors have realized that scanning the areas in alternating passages of perpendicular direction to obtain features with spatial resolution along at least two axes e.g. lateral "x" and longitudinal "y" axes (not shown), is more advantageous. If the area is scanned in a zig-zag pattern with long parallel sections of the path, the spatial resolution along the path direction may be much greater than along the perpendicular direction to the scan path, which may lead to some feature detail level changes being undetected. Additionally or alternatively, the sonar scan path may be based on a fractal curve, like a Hilbert curve. The Hilbert curve has relatively the same number of path segments along both axes "x", "y" (not shown). Using the fractal curves has yet another advantage that the resolution of the scan path can be changed in real-time. The variable resolutions of the Hilbert curve can e.g. be obtained using quadtree subdivision. Further details about the quadtree structure and Hilbert curve or any of the above-mentioned path-planning algorithms are considered to be available to the skilled person and are thus avoided herein for the sake of brevity.

The fishing sonar apparatus 2 may cause the sonar module 3 to perform the at least one sonar scan by sending command signals to the sonar module 3. The command signals may be sent wirelessly or additionally or alternatively using a wired communication bus between the fishing sonar apparatus 2 and the sonar module 3. The control unit 4 is additionally configured to obtain sonar data associated with the at least one sonar scan in the first location 6. The obtained sonar data comprises at least one characteristic of the first location to be compared with the one or more predefined criteria.

Sonar signals could be produced and received based on any sonar technology e.g. high-intensity radar pulse (CHIRP) sonar signals. Alternatively, as realized by the present inventor and explained elsewhere in detail, phase-modulated sonar signals can be generated and emitted to the body of water. Subsequently phase-correlated signal processing techniques and more specifically a phase-only correlation (POC) signal processing can be applied to the received reflected phase-modulated impulse sonar signal from the body of water, wherein the reflected signal comprises reflection of the emitted sonar signal from an at least one underwater object 25a, 25b, 25c, 26, 27 surrounded by the body of water 5. The inventors have realized that using POC in phase-modulated sonar signals reflected from fish or other underwater objects provides an advantage of identifying the main narrow peaks in the phase-correlated signals individually and distinctively. Even further, by using POC, range resolution, object-separation and SNR are substantially improved. Accordingly, detailed object-related information can be obtained, which provides considerably improved possibilities for localization of fish. The distances between the sonar module from different fish, or schools of fish 250 can be determined with enhanced accuracy. Further, individual fish can be identified and accurate separation between individual fish e.g. between a first fish 25a and a second fish 25b among a school of fish 250 can also be determined. Accordingly, valuable insight for planning and decision-making regarding fishing activities and localization of fish by the fishing vessel can be achieved.

Location in the present context is to be construed as a particular place or position e.g. in a pool of water such as a lake or sea, etc. The location may comprise the geographical position or whereabouts of the vessel associated with a set of coordinates e.g. in the form of a Global Navigation Satellite System (GNSS), such as global positioning system (GPS) coordinates. The location may also be construed to mean an area in the pool of water which is to be scanned by the vessel. Therefore, the first set of instructions comprising location data of a first location 6, may comprise a GNSS coordinate for a geographical position on the lake as well as a perimeter of the area corresponding to or surrounding the geographical position having the specific GNSS location data. In several embodiments, the control unit 4 may obtain such instructions via a memory of the fishing sonar apparatus 2 e.g. from the memory 12 of the control unit 4. The vessel 1 may access a digital map (e.g. a HD-map), either in the form of a locally stored digital map on the memory 12 or via a remote data repository accessible via an external communication network 20 in communication with a wireless device 9 controlled by the user 91. The location data and area-related information as well as instructions on how to select the first location 6 i.e. first area 6 to scan may be marked and specified on the digital map. In several embodiment, the first set of instructions comprising the location data and area-selection information may be obtained from the wireless device 9 and decided by the user 91. In the present context, the terms location and area may be used exchangably.

The first set of instruction may e.g. comprise two or four corners of an area to be scanned, arbitrary number of points defining a polygon of an area to be scanned, a circle center and its radius defining the area to be scanned, the starting point and the direction of movement i.e. heading of the vessel (e.g. starting at the shore and moving away from the shore) possibly in a predetermined zig-zag pattern and so forth. Using the zig-zag pattern for finding and scanning the area may allow to scan fishing locations that are closest to the user 91. The user 91 may draw a line across the shore, and another line showing the scan direction on the digital map via e.g. a user interface such as a display means of the wireless device 9. In some embodiments, the user may release the vessel in the shore and allow the vessel to find the shoreline autonomously, e.g. based on map data of the area, minimum depth of water or the presence of underwater/overwater vegetation. Further, the first set of instructions may comprise the type and/or amount of the bait to be dispensed in a location such as in the first location or in the one or more second locations. The fish bait might comprise different types 21a, 21b of bait suitable for different fish. The types and/or amount of bait may in some embodiments be comprised in a specific set of instructions other than the first set of instructions.

In several embodiments and aspects, the one or more predefined criteria which is used to identify the one or more second locations and dispensing fish bait may comprise a set of predetermined characteristics associated with a location such as the first and the second locations. The predetermined criteria in various embodiments may comprise any one of a predefined shape (hole/pit), a predefined size, a predefined water depth, a predefined water depth alteration profile (shallow or deep water or transition in between), a predefined sea-bottom profile (a hardness characteristic i.e. hard bottom or soft bottom), a predefined species of fish, a temperature parameter of the water, a salinity parameter of the water, and a thermocline depth parameter of the water. The predetermined criteria (parameters or parameter ranges) for each of the possible features or characteristics of a fishing location may comprise a defined target value as well as a tolerance for that target value. For example, the predetermined depth of water may be defined as 10 m ($\pm$1 m tolerance), number of bottom vegetation 1 e.g. on a customized scale of 0 to 10 ($\pm$1 tolerance), etc. In some examples, a range for each of the feature values may be defined e.g. water depth 9 m-11 m, vegetation 0-2, etc.

The inventors have realized that by obtaining the sonar data of a scanned location e.g. the first location and extracting at least one characteristic of the first location from the obtained sonar data which can be compared with the predetermined characteristics comprised in the predetermined criteria, one or more second locations 61, 62 can be identified. The one or more second locations in the present context can be described as optimal or desired target locations that are suitable for fishing activities such as distribution of bait and/or capturing fish. By identified in the present context it is meant that the one or more second locations 61, 62 with matching characteristics with the predetermined characteristics are determined, discovered and marked e.g. on a map for further fishing activities. By identifying these best locations for fishing based on the sonar data and the one or more predefined criteria, the user is provided with the possibility of identifying the most desirable fishing spots in an area and thus avoid random selection of fishing spots based on only scanning results showing objects or fish in general, thus saving time and resources to find the desired types of fish. Further, the inventors have realized that by obtaining the sonar data associated with the first location and/or one or more second locations the user 91 and/or the control unit 4 e.g. in case of an autonomous vessel can make decisions to effectively dispense and distribute bait in the first location and/or the one or more second locations to attract fishes including targeted species of fishes, hence advantageously improving the yield and economics of fishing. The control unit 4 is thus configured to transmit a signal, based on the first set of instructions, indicating the first type 21a of bait to be dispensed in the first location and/or in the one or more second locations, to a bait-dispensing module 16 of the vessel. In several embodiments, the control unit 4 may transmit command signals to a propelling means of the vessel such as an engine of the vessel to maneuver the vessel to the target locations e.g. the first location and/or one or more second locations where bait is to be dispensed. The bait dispensing module may be configured to dispense and distribute the first type of bait 21a, or second type of bait 21b based on the location data such as GNSS coordinates of the first location and/or one or more second locations. In other words, the control unit may be configured to compare the current GNSS coordinates of the vessel with the GNSS coordinates of the first location 6 and/or the one or more second locations 61, 62 and transmit the signal to dispense the bait only when the current GNSS coordinates match the GNSS coordinates of the target location e.g. first location and/or the one or more second locations. The control unit 4 may in several embodiments transmit the signal to the bait dispensing module 16 in advance, regardless of the current GNSS coordinates of the vessel. Under such circumstances, the transmitted signal from the control unit 4 may comprise instructions for the bait-dispensing module to dispense the bait in the target location based on a scheduled time plan, at a certain time point on a planned travel route of the vessel, or whenever the current GNSS location of the vessel matches the GNSS coordinates of the target locations 6, 61, 62.

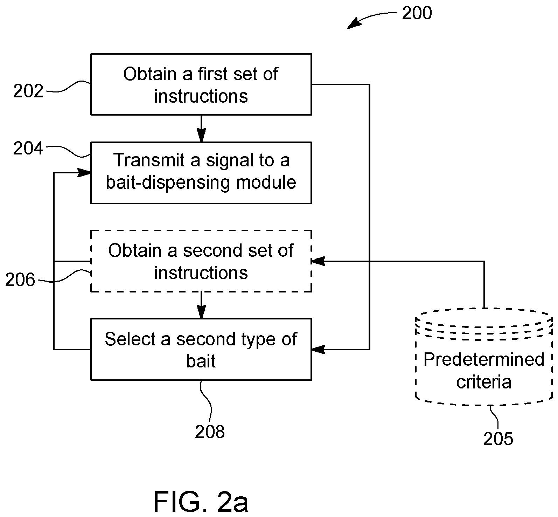

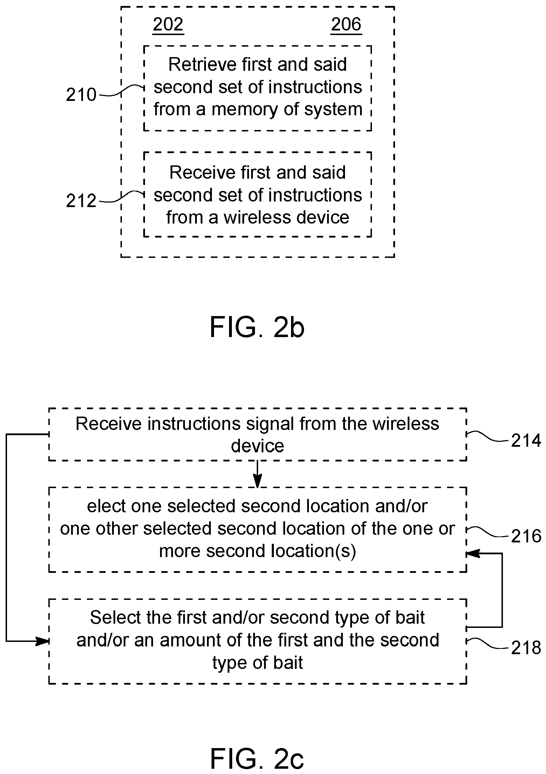

Figs. 2a-c show flowcharts of a method 200 according to several aspects and embodiments for distribution of bait for fish 25a, 25b, 25c by a vessel 1 comprising a fishing sonar apparatus 2 having a control unit 4. The method 200 as shown in Fig. 2a comprises obtaining 202 a first set of instructions comprising location data of a first location 6 and sonar data associated with at least one sonar scan performed in the first location. The method further comprises transmitting 204 a signal, based on the first set of instructions, indicating a first type 21a of bait to be dispensed in the first location, to a bait-dispensing module 16 of the vessel.

In several aspects and embodiments, obtaining sonar data may comprise determining the features of the locations being scanned i.e. the first location and the one or more second locations and/or locations along a scan route. The first set of instructions may comprise the sonar data which has been processed previously and its corresponding features extracted and be used for selection of locations by the control unit 4 and/or the user 91 to distribute bait into the selected locations.

The obtained sonar scans in the first location i.e. reflected sonar signals 103 received from the underwater objects, may be analyzed and/or processed by the control unit 4 and/or processing circuitry of the wireless device 9 to generate the sonar data associated with the first location. The obtained sonar data associated with the first location may also comprise obtained sonar data associated with the one or more second locations 61, 62 substantially comprised in the first location 6. The obtained sonar data associated with the one or more second location 61, 62 may comprise at least one characteristic of the one or more second location to be compared with the one or more criteria. The sonar data resulting from such processing can be used for purposes like producing a map data of the area, identifying the characteristics of the area, identifying fish species having their habitats in the area, creating a map data of the water bottom and geological characteristics and variations thereof in the water bed used e.g. to determine and improve the probabilities of finding certain fish species.

In some embodiments extracting the features from sonar data may be performed by means of supervised learning algorithms. For instance a machine learning (ML) model may be trained on a large dataset such as training, testing, validation dataset, synthetic and/or real dataset, which might be not accurate enough (in case of synthetic data) or not easily obtainable/labelable (in case of real data). The ML models if trained adequately can provide accurate predictions of the characteristics of the first and/or the second locations. In some embodiments extracting the features from the sonar data may comprise employing unsupervised learning algorithms (Principal Component Analysis (PCA), Isometric Mapping (ISOMAP), or others). In these scenarios, unlabeled dataset of sonar data needs to be collected. Pre-processing steps may be introduced to the process i.e. by cropping the area around the sea bottom from sonar scans for bottom hardness classification. In some embodiments, existing algorithms for vegetation and bottom hardness estimation may be used to extract these characteristics from the sonar data.

In several embodiments, the resolution of the sonar scans may be evaluated and it can be determined if the resolution should be increased or decreased depending on the scan method as described earlier. For instance, the extracted features from a current sonar scan may be compared to the features from one or more previous scans (e.g. the last 1-10 sets of scans), and it may be determined if the features have been changing, or at what rate these changes might have happened. The feature-change rate can be determined by calculating the spatial gradient of the feature values. In the simplest form, the difference between the current measured feature values and the previous feature values can be considered, while for more advanced calculations several previous values might be utilized. It is worth noting that the derivative might need to be calculated with respect to the location where the features were obtained. In some scenarios, when it is determined that the features are changing slowly in the respective areas (i.e. feature detail levels are low), the sonar scan resolution may be decreased. However, in some scenarios when it is determined that at least one feature in the respective scan locations is changing rapidly, the scan resolution may accordingly be increased. In some examples, by using the Hilbert curve, the area scan path for the vessel may be constructed where the resolution of the vessel movement i.e. the resolution of the scanning path can be increased, upon discovering greater detail level of the features of the sonar data i.e. in case of more rapid changes of the feature values. The angle "θ" (not shown) of the sonar scan can also be altered (e.g. selected from some possible alternatives) by the sonar scanning algorithm depending on the level of the detail of the features, extracted from the sonar data, more accurately from e.g. the rate of change of the features, the depth of the water bottom and the resolutions of the scanning path curve. With increased scanning path resolution, wide-angle scan cones with wider cross-sections 32 might overlap at certain depth (this depth can be found geometrically knowing the scan cone angle "θ"), thus resulting in redundancy of information, without directly increasing the accuracy of the features. Accordingly, with a narrower sonar scan angle (which may be obtained by increasing the frequency of the emitted sonar signals), features may be resolved with an increased accuracy, i.e. being obtained from a smaller area of the water bottom and thus resulting in a smaller cross-section 32 of the scan cone.

In yet other scenarios, usage of a space-filling fractal curve that can fill a non-rectangular area (for example, circular, triangular or non-regular) can be provisioned. For example, quadtree area subdivision might not be optimal, or additional steps might be needed to ensure the scan path stays within the defined area.

In several embodiments, Bayesian optimization may be designed to minimize the number of steps required to find a combination of parameters that are close to the optimal combination of predetermined characteristics. The parameters that are optimized comprise the coordinates of the vessel i.e. the locations where sonar scans are performed. In this context, the optimal parameters (coordinates) are those at which the obtained sea bottom features are closer to the predetermined characteristics (predetermined feature values that define a desired fishing location). Here the 'number of steps' is to be understood as the number of locations to which the vessel is maneuvered to, while the 'combination of parameters' is to be understood as the coordinates of the locations, at which a location-dependent loss function returns a minimum value i.e. suitable location. The Bayesian optimization thus seeks to optimize the location-dependent loss function by evaluating the function as few times as possible. The evaluation of this loss function comprises maneuvering the vessel to a location, performing a sonar scan and extracting the sea bottom features.

To this end, the process may employ a proxy optimization problem (finding the maximum of the acquisition function) which despite complexities may be a less costly approach especially in the computational sense wherein common computational tools can be employed. Therefore, Bayesian optimization may be the most adequate scanning approach for situations where sampling the function to be optimized (for example, maneuvering the vessel) is a very expensive endeavour. In scenarios, where prior bathymetry data may be available, a Bayesian optimization strategy could also be considered advantageous instead of employing the grid or multi-resolution fractal function scan path. In some examples, an initial coarse grid scan may be performed and later a Bayesian optimization can be applied to the sonar scan data. Tis way, the total sum path travelled during the initial coarse scans and the subsequent Bayesian optimization might be less than the length of the Hilbert curve path. In both the bathymetry and the coarse scan scenarios, using a set of data points at known locations, allows for using Bayesian optimization to determine where the objective function (the location-dependent loss function) shall be evaluated further, that is, the locations where the vessel shall be maneuvered to, and further scans be performed.

In some examples, after selecting a new set of possible loss function minima locations (i.e. the suitable fishing locations where the output of the loss function is smaller than the predefined threshold value), all of the identified locations may be visited in a shortest tour by the vessel, which is the solution of the Traveling Salesman problem (TSP). There are plenty of solutions to TSP, either exact or heuristic. If additional refinement will be needed, another iteration of Bayesian optimization can be performed. In some scenarios random movement (initial scan or local scans) may be used as the scanning method. Random movement can e.g. be used for initial scanning for Bayesian optimization, wherein no bathymetric data is available. Further, wherein the features of the obtained sonar data cannot be accurately estimated (e.g. there might be a need of some sort of feature quality evaluation metric/solution), several scans at random locations around the current vessel location might be performed to obtain more data and, in turn, increase the reliability feature estimation in those locations. This way unforeseen influences of the equipment or absorption losses in the body of water, or similar errors may be minimized.

In several embodiments, the first set of instructions may further comprise location data of one or more second location(s) being substantially comprised in the first location and sonar data associated with at least one sonar scan performed in the one or more second location(s). The method may further comprise transmitting 204 a signal, based on the first set of instructions, indicating the first type of bait 21a to be dispensed in the one or more second location(s) 61, 62, to the bait-dispensing module 16 of the vessel.

Accordingly, the control unit 4 and/or the wireless device 9 may select the one or more second locations 61, 62 as target locations for distribution of bait. The control unit and/or the wireless device 9 may obtain the GNSS location data of the one or more location 61, 62 as well as the sonar data associated with the one or more second locations, either from a previously stored database, or from sonar scans performed by the vessel. The previous data may be stored locally on the memory of the fishing sonar apparatus 2 and/or partly be retrieved from the cloud 20 or remote data storage sites by the wireless device 9. The obtained data, as mentioned earlier might have been previously obtained and processed sonar data based on sonar scans performed by the same vessel or another vessel. In some embodiments, the sonar data comprised in the first set instructions may be based on the sonar scans performed by the vessel on its current bait distribution mission.

In some embodiments, selection of the one or more second locations may be additionally or alternatively be based on the user's choice. For instance, based on the user's 91 knowledge of the area where the bait will be distributed.

In several embodiments, the method 200 may comprise the method further comprises obtaining 206 a second set of instructions comprising one or more predefined criteria 205. The method may accordingly comprise transmitting 204 a signal, based on the first set of instructions and the second set of instructions, indicating the first type 21a of bait to be dispensed in the one or more second location(s) if the sonar data associated with the one or more second location(s) comprising at least one characteristic of the one or more second location to be compared with the one or more criteria matches the one or more predefined criteria, to the bait-dispensing module of the vessel.

In several embodiments, the one or more second locations 61, 62 are identified optimal locations suitable for fishing. The identification of the one or more second locations 61, 62 is based on the obtained sonar data of these locations and comparison of the at least one feature of these locations with the predetermined criteria.

In various aspects and embodiments, determining if the sonar data of the one or more second location 61, 62 matches the one or more predefined criteria, by calculating a loss function comprising one or more similarity parameters indicative of an agreement between the at least one characteristic of the one or more second location and the one or more predefined criteria. In other words the characteristics of the one or more locations extracted from the sonar data of the sonar scans performed in the one or more second locations is compared to the predetermined characteristics for identifying the suitable fishing locations. This comparison is made by calculation of the loss function and if an output of the calculated loss function falls below a predetermined threshold value, the method may further comprise identifying the one or more second locations 61, 62 i.e. as suitable fishing locations.

For example, the loss function may be defined as:

$$L = \sum\{i \in I\}\, a_i\, |f_i - t_i|,$$

where "I" is the set of features, "$a_i$" is a weight coefficient of the i-th feature, "$f_i$" is a measured i-th feature value and "$t_i$" is the target i-th feature value. (wherein f and t can be multidimensional vectors)

If the output of the loss function "L" is below the predetermined threshold, (by evaluating output of loss function against the predetermined threshold) the location under scrutiny may be identified and marked as a suitable location for fishing. Additionally or alternatively, a similarity function may be determined for each of the features of the one or more second locations against the features comprised in the predefined criteria e.g. by calculation of a Euclidean distance between the feature vectors. This way, a threshold value can be defined for the differences between each measured feature and the target values separately.

Further, the loss function may provide a fitness criteria for each identified location, which might be obtained by using ML solutions, for example, a Convolutional Neural Network operating directly on the sonar data features (i.e. frames of several sonar scans), without explicit feature extraction steps. Same approach could possibly be used also for determining if the scan resolution should be increased or decreased in a location.

When the one or more second locations 61, 62 are identified as the suitable fishing locations, they can be marked on the map of the area with their respective GNSS coordinates, description, assigned fitness grades provided by the calculated loss function and/or name definitions. The control unit 4 may be configured to record these locations in the memory of the fishing sonar apparatus and/or transmit the information to the user in real time. The information regarding the identified locations may also be transferred to an external network such as a cloud network 20 and be accessed by the user later. In some embodiments, identifying the one or more second location may comprise a continuous or sequential process of identifying the aforementioned locations. For example, in some scenarios, one second location 61, 62 may be identified first, then transmitted to the wireless device 9 and/or to the control unit 4. Accordingly, the user 91 or the control unit 4 (e.g. in case of the autonomous vessel) may evaluate and reject this identified location as not being the most suitable location. Therefore, the process of identification continues to find another or more suitable second location(s) and present them to the user or the control unit. The user and/or the control unit may then evaluate and accept one or more of the identified locations. In various embodiments, all of the suitable second locations may be identified and presented to the user or control unit. For instance, the first "n" suitable locations may be identified initially. The entire area e.g. the entirety of the first location 6 may be scanned and then "n" location candidates that match the predefined criteria the best can be identified. The user and/or the control unit then can select one or more of the identified suitable locations as the ultimate elected suitable locations. This would provide the most comprehensive results at the cost of taking the most time to complete the scan. It is however clear to the skilled person that various scenarios other than the above-mentioned examples for identification and selection of the one or more second locations 61, 62 suitable for fishing can be designed and performed according to the proposed method and fishing sonar apparatus. By identification of the suitable fishing locations, activities such as dispensing bait including selection of the type of bait to be dispensed in each identified location based on the characteristics of the identified locations and/or fishing can be subsequently performed.

In some embodiments, the method may further comprise selecting 208, based on the first set of instructions and the second set of instructions, a second type 21b of bait, which is different from the first type 21a of bait. The method may further comprise transmitting 204 a signal, based on the first set of instructions and the second set of instructions, indicating the first type 21a of bait to be dispensed in one selected second location 61, 62 of the one or more second location(s) and the second type 21b of bait to be dispensed in one other second location 61, 62 of the one or more second location(s) 61, 62, to the bait-dispensing module of the vessel.

By the advantageous method 200, and identifying the characteristics of the scanned areas matching the predetermined characteristics, it is possible to identify certain fish species having their habitats in the scanned areas. This information can be expediently used to determine and select the types of bait suitable for each species. By dispensing the favourite food of each fish species in their identified habitat, the probabilities of attracting and capturing certain fish species improves significantly. This way the user 91 and/or the control unit 4 may select one identified location among the one or more identified locations 61, 62 to dispense the first type 21a of bait and another suitable location being the habitat to a different species of fish to dispense the second type of bait 21b.

In some embodiments obtaining 202, 206 the first and the second set of instructions may comprise retrieving 210 the first and the second set of instructions from a memory 12 of the fishing sonar apparatus 2. In some embodiments, obtaining the first and the second set of instructions may comprise receiving 212 from a wireless device 9, a wireless signal 10 comprising the first and the second set of instructions.

In some embodiments, the method may further comprise receiving 214 a signal from the wireless device, the signal comprising instructions from the wireless device for electing one second location of the one or more identified second location(s) and/or one other second location of the one or more identified second locations. The instructions may in some embodiments be comprised in the signal comprising the first and/or second set of instructions. In some embodiments however, the instructions for electing a location may be transmitted in a separate signal from the wireless device. In some aspects and embodiments, at least one of the at least one sonar scan performed in the first and/or in the one or more second location, the sonar data associated with the at least one sonar scan performed in the first location and/or in the one or more second location(s), the identified one or more second location, and/or the at least one characteristics of the identified one or more second location(s) may be transmitted to the wireless device. These information transmitted directly to the wireless device 9 via e.g. short-range e.g. WiFi or other telecommunication networks, or it may be transmitted to an external network 20 such as cloud network which can be accessed by the wireless device 9. By accessing the transmitted data at various stages of scanning and identification of the suitable locations for distribution of bait, the user 91 may decide to intervene in the process at any stage by manual override. The user 91 also gains an elevated degree of control over handling of data ranging from acquisition of raw sonar scans to the processed sonar data and can make informed decisions and selections accordingly.

A further advantage provided by this step is that the user will have full control over choosing which location will be the ultimate suitable location among the identified candidates for dispensing bait. In other words, the user can elect among one or more suitable locations 61, 62, which have been identified based on matching characteristics with the predefined characteristics, a location of the utmost interest for the user to dispense bait. It will be the user's command, which will decide in which one of the candidate locations the bait is to be distributed. The method may further comprise electing 216 the one second location of the one or more second location(s) and/or the one other second location of the one or more second location(s) based on the received instructions from the wireless device such that the first or second type of bait is dispensed in the elected locations. In some embodiments, the instructions may further comprise instructions for selecting 218 the first and/or second type of bait and/or an amount of the first and/or the second type of bait to be dispensed in the elected second locations of the one or more second location(s).

Fig. 3 shows a schematic side view of a vessel 1 comprising a fishing sonar apparatus 2 for scanning a body of water by a fishing sonar module 3 comprised in the vessel 1. The fishing sonar apparatus 2 comprises a control unit 4.

The fishing sonar apparatus 2 is configured to perform at least one sonar scan in the body of water 5 by means of the sonar module 3 of the vessel 1. The fishing sonar apparatus 2 may cause the sonar module 3 to perform the at least one sonar scan by sending command signals to the sonar module 3. The sonar module 3 may be an integrated sonar module 3 i.e. be integrated as a part of the fishing sonar apparatus 2 of the vessel or in some embodiments be a separate module connectable to the fishing sonar apparatus 2. Accordingly, the sonar module 3 can be a portable unit of different dimensions adaptable and arrangable to various types of vessels comprising the fishing sonar apparatus 2. The integration of the sonar module 3 into the fishing sonar apparatus 2 maybe performed at any stage of production of the vessels or by retrofitting of the sonar module 3 to existing vessels 1.

The sonar module 3 may comprise at least one sonar transducer element 31 for producing and receiving reflected the sonar signals. The sonar module 3 is configured to generate ultra-sound signals 101 to be emitted to the body of water and to receive reflected ultrasound signals 103 as they are reflected from obstacles, bed of the waterbody such as bottom 26a, 26b of sea or lake, objects such as fishes 25a, 25b, 25c or vegetation 27, etc.

The sonar transducers could be arranged in the fishing sonar apparatus for side scanning i.e. a surface 51 of water and e.g. be rectangular lateral transducers and/or be circular bottom transducers arranged for 2D-scanning of depth of the water. The transducers may be made of piezoelectric ceramics. The rectangular ultrasonic transducers for side-scanning may be arranged to produce fan-shaped ultrasonic beams. The circular 2D-scan transducer or transducers may be arranged to produce conical ultrasonic beams toward the bed i.e. bottom of the waterbody, at least, for conventional 2D-scanning.

The command signals may be sent wirelessly or additionally or alternatively using a wired communication bus between the control unit 4 of fishing sonar apparatus 2 and the sonar module 3. In various embodiments, the command signals are sent to the sonar module 3 by the control unit 4 which may be an on-board control unit. The control unit 4 may additionally or alternatively be a distributed control unit such as a control unit implemented in a cloud network 20. The commands may be transmitted to the sonar module 3 by the user 91 of the fishing sonar apparatus 2 via the wireless device 9 using wireless communication links 10 or alternatively or additionally be transmitted partly by the on-board control unit 4 and partly by the wireless device 9 or any combination thereof.

The vessel 1 further comprises a perception system 8 and a localization system 7. A perception system 8 is in the present context to be understood as a system responsible for acquiring raw sensor data from sensors 8a, 8b such as cameras, RADARs, temperature sensors, water sensors, PH sensors, etc. and converting this raw data into scene understanding. This way, the control unit 4, may acquire further information regarding the temperature, salinity, PH, or other characteristics of the pool of water, hence providing a broader understanding of the underwater conditions. The perception system 8 may be further configured to obtain raw sonar scan data directly or via a dedicated sensor control circuitry 13 in the vessel 1 from the sonar module 3.

The localization system 7 is configured to monitor a geographical position and heading (compass orientation) of the vessel, and may be in the form of a Global Navigation Satellite System (GNSS), such as a GPS. However, the localization system may alternatively be realized as a Real Time Kinematics (RTK) GPS in order to improve accuracy. Moreover, in the present context the vessel 1 is assumed to have access to a digital map (e.g. a HD-map), either in the form of a locally stored digital map or via a remote data repository accessible via an external communication network 20 (e.g. as a data stream or from a cloud network). In some embodiments, the access to the digital map may for example be provided by the localization system 7. The localization system may further comprise inertial measurement units (IMUs). An IMU may be understood as a device configured to detect linear acceleration using one or more accelerometers and rotational rate using one or more gyroscopes. Thus, in some embodiments the localization of the vessel's position or orientation may be based on motion sensor data e.g. data from accelerometers and gyroscopes, from the IMU alone or in combination with GNSS data. The control unit 4 of the fishing sonar apparatus 2 comprises one or more processors 11, a memory 12, a sensor interface 13 and a communication interface 14 as well as antenna elements 15. The processor(s) 11 may also be referred to as a control circuit 11 or control circuitry 11. The control circuit 11 is configured to execute instructions stored in the memory 12 or as provided by the user 91 of the fishing sonar apparatus 2 e.g. via a wireless device 9 to perform a method 300 according to any one of the embodiments disclosed herein. In more detail, the control circuitry 11 is configured to perform the method steps of Fig. 3. In several embodiments, the processing circuitry 11 further comprises, analog or digital signal processing units such as DSP units, MCUs, MCUs with embedded DSP, etc. The memory 12 of the control unit 4 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

Further, the vessel 1 may be connected to external network(s) 20 via for e.g. and instance 14 for a wireless link 10 (e.g. for retrieving map data). The same or some other wireless links 10 may be used to communicate with the external wireless device 9. Cellular communication technologies may be used for long range communication such as to external networks. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. Local communication within the vessel may also be of a wireless type with protocols such as WiFi, Bluetooth, or similar mid/short range technologies.

The vessel 1 may be a semi or fully autonomous vessel having the coordinates and location data of the areas to perform sonar scans stored in its memory 12 or receive such information by the localization system 7 and from the wireless device 9. The vessel 1 may carry passengers or can be an unmanned vessel. The vessel may be a remotely controlled vessel, wherein the instructions regarding steering and propelling the boat as well as instructions for performing the sonar scans are received via wireless communication between the vessel and the wireless device such as a user equipment (UE) 9. The wireless device 9 is operable to remotely control and steer the vessel, accordingly configured to transmit and receive wireless signals to and from the vessel. The UE 9 may be a mobile phone or a tablet capable of wireless communication e.g. equipped with WiFi transmitters and receivers and/or mobile communication such as 4G, LTE, 5G, 6G communication protocols and display means to present the sonar image information to the user. Accordingly, various objects such as the bottom of the water pool 26, vegetation 27 or fish 25a, 25b, 25c can be identified and presented to the user of the fishing sonar apparatus. Sonar data may be presented to the user in form of sonar images 510 transmitted to a display comprised in the fishing sonar apparatus 2 of the vessel 1 or to a display of the wireless device 9, having graphical output means, wherein the user 91 can see the location and/or physical characteristics of fishes, the bed or bottom of the water pool, vegetation, etc. Providing such high-precision information regarding the underwater objects on a display device enables the user 91 to make informed decisions for planning and execution of fishing operations, thus making the process more cost-efficient and less labour-intensive. The vessel may transmit its current location as well as sonar data of its current position to the wireless device continuously or in predetermined periods of time or time intervals.

In various embodiments, the UE 9 may be configured to receive information concerning the body of water 5 and sonar data of the performed at least one sonar scans by the sonar device 3 of the vessel. Such information may be raw information retrieved from the sonar device or from the control unit 4. The information could also comprise analyzed and processed data such as processed reflected sonar scans by the control unit 4.

The vessel 1 typically comprises a propelling source, such as an engine (not shown). The engine could e.g. be operable by electricity or be a combustion engine. The electrical engine could be operable by direct current (DC) provided by a battery module and power management system (not shown) comprised in the vessel. The control unit 4 and/or the wireless device 9 can be configured to operate the engine based on the specific requirements of the fishing and scanning voyages of the vessel. As mentioned earlier, the engine can be operated in a complete autonomous mode by the control unit and based on the instructions stored in the memory 12 of the control unit 4. The engine can also be operated remotely by the wireless device 9 by receiving control instructions from the wireless device 9 either in real time or via a cloud network 20 or by activating certain operation or route plans stored in the memory 12 of the vessel by the user 91. The engine can also be operated partly autonomously and also partly by receiving instructions from the wireless device. An example of such could be a scenario, where the user would override the autonomous function of steering the vessel and take over control of the vessel by sending steering instructions to the control unit via the wireless device. Alternatively or additionally the engine can also be operated and the vessel be steered by an on-board user or passenger of the vessel. In such embodiments the control unit may be connected to an on-board user interface such as a display as well as means to input instructions into the control unit. The user may execute commands and interact with the information via the user interface (not shown). The battery module comprised in the vessel can be used as a power source to supply electric power to various modules and components on board of the vessel. The battery module may be chargeable battery module.

The control unit may in various embodiments and aspects be configured to control the various operations of the vessel. The operations may in different embodiments include but not be limited to assuming control and steering the vessel freely or to a predetermined location based on GNSS coordinates. The operations could also comprise instructing the on-board sonar module to perform sonar scans in various locations. The vessel and/or the wireless device may select the most optimal path to scan the area based on a current battery level and configuration. For example, it can be suggested to the user that the vessel will not complete the whole mission and/or the vessel may automatically come back to the user, terminating the scanning. On low-battery or lost connection situations, the fishing sonar apparatus may be configured to propel and return the vessel to the start point e.g. to the nearest shore (if known) or to the last connected spot. The fishing sonar apparatus may switch to a low-power mode for returning to the starting point. After battery modules (rechargeable or replaceable) are replaced with new ones, the vessel may return to continuation of the terminated scan or restart a new scan session.

The vessel may additionally or alternatively comprise a solar panel (photo-voltaic module) which allows the user to charge the battery modules of the vessel and electronics with solar energy e.g. during the scanning or during fishing without using external energy sources. Vessel can also be covered in solar paint instead of or in addition to solar panels.

The fishing sonar apparatus may collect and store data about the battery level, or state of charge, the strength of the wireless connection to the wireless device and/or to the external networks, connection strength, associated with geospatial data. The fishing sonar apparatus may further be configured to collect and store data about the start point of the journey, as well as start point of the sonar scan. Upon defined events (low battery, disconnected controller, etc.), the fishing sonar apparatus may be further configured to return the vessel to predefined locations, predefined in case such events may occur.

The control unit 4 may be realized as a software controlled processor. However, the control unit may alternatively be realized wholly or partly in hardware. The control unit may be realized as a plurality of computer processing units 11 that together form the control unit i.e. the plurality of computers 11 may be interconnected in order to form the control unit and its functionality as disclosed herein. The control unit according to various embodiment may be at least partly arranged on-board of the vessel or alternatively or additionally may be partly arranged remotely e.g. at a remote data center in wireless communication with the vessel via external networks 20, e.g. at the edge of a telecommunication network such as a 5G network 20, or alternatively or additionally on a cloud network 20 such as a cloud computing system which may comprise distributed cloud computing resources. In various embodiments the control unit comprises processing circuitry 11 such as at least one processor 11 configured to carry out various processing tasks such as processing the obtained sonar scans, producing the processed sonar data and the POC signals out of the at least one sonar scan, determining information based on the processed sonar scans i.e. the sonar data in various locations, performing determination of time-of-flight of the phase-correlated reflected sonar signal, calculating distances between the sonar module and various underwater objects, or distances between various underwater objects, envelope extraction of the phase-correlated reflected sonar signal, multiplication of the envelope of the signal with the phase-correlated signal and so forth. The control unit may further be configured to compare the processed sonar data with the at least one predetermined criteria. The control unit is adapted to be in wired and/or wireless communication with on-board communication interface 14 of the vessel as well as being connected to the GNSS or GPS of the vessel, thereby determining and storing the past, current, or future positions and heading of the vessel in the memory of control unit.

The present disclosure has been presented above with reference to specific embodiments. However, other embodiments than the above described are possible and within the scope of the disclosure. The method of scanning an area and a fishing sonar apparatus for scanning a body of water have been explained with respect to a fishing sonar apparatus comprised in a vessel. However, the method and the fishing sonar apparatus for scanning a body of water to identify suitable fishing locations and distribution of bait may be readily implemented in other devices such as an independent fishing sonar device and/or portable and/or castable fishing sonar devices configured for scanning a body of water and localization of fish and underwater objects. For instance, the fishing sonar apparatus may be comprised in a castable enclosure. Thus, the fishing sonar apparatus for scanning a body of water can be implemented in the castable enclosure which may include a housing having buoyant components. The castable fishing sonar device may also include suitable wireless communication interfaces, perception systems, localization systems, processing circuitry etc., similar to what was explained earlier with respect to such systems in the embodiments including a vessel, comprised in the fishing sonar apparatus or implemented as separate units in the castable fishing sonar device. The castable sonar device can be casted into the body of water. The fishing sonar apparatus comprised in the castable enclosure may comprise a control unit configured to obtain a first set of instructions comprising location data of a first location and obtain a second set of instructions comprising one or more predefined criteria. The control unit may be configured to perform at least one sonar scan in the first location by means of a sonar module comprised in the fishing sonar apparatus and obtain sonar data associated with the at least one sonar scan in the first location. The obtained sonar data may comprise at least one characteristic of the first location to be compared with the one or more criteria. The control unit may be further configured to identify, based on the sonar data and the one or more predefined criteria, one or more second location(s) being substantially comprised in the first location, wherein the sonar data may comprise sonar data associated with the one or more second location. The control unit of the fishing sonar apparatus may comprise one or more processors or control circuitry, a memory, a sensor interface and a communication interface as well as antenna elements. The control circuitry may be configured to execute instructions stored in the memory or as provided by the user of the fishing sonar apparatus e.g. via a wireless device to perform methods for scanning a body of water.

Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a control unit, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible or computer-readable medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) (associated with the control unit) may be or include any number of hardware components for conducting data or signal processing or for executing computer code stored in memory. The control unit may comprise an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the fishing sonar apparatus and methods of this description. According to an exemplary embodiment the memory is communicably connected to the processor 11 (e.g., via a circuit or any other wired, wireless, or network connection) and includes computer code for executing one or more processes described herein.

As used herein, the term "if" may be construed to mean "when or "upon" or "in response to determining or "in response to detecting." depending on the context. Similarly, the phrase "if it is determined' or "if a location or event is detected or identified" may be construed to mean "upon determining or "in response to determining" or "upon detecting and identifying the location or event" or "in response to detecting the location or event" depending on the context. The term "obtaining" is herein to be interpreted broadly and encompasses receiving, retrieving, collecting, acquiring, and so forth.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the disclosure may be at least in part implemented by means of both hardware and software, and that several "means" or "units" may be represented by the same item of hardware.

Some example enumerated embodiments of the present disclosure are set out in the following items:

A1. A fishing sonar apparatus for distribution of bait for fish, the fishing sonar apparatus comprising a control unit and a bait-dispensing module; wherein the control unit is configured to:

obtain a first set of instructions comprising location data of a first location and sonar data associated with at least one sonar scan performed in the first location and

transmit a signal, based on the first set of instructions, indicating a first type of bait to be dispensed in the first location, to the bait-dispensing module of the fishing sonar apparatus.

A2. The fishing sonar apparatus according to example enumerated embodiment A1, wherein the first set of instructions further comprises location data of one or more second location(s) being substantially comprised in the first location and sonar data associated with at least one sonar scan performed in the one or more second location(s) and wherein the control unit is further configured to transmit a signal, based on the first set of instructions, indicating the first type of bait to be dispensed in the one or more second location(s), to the bait-dispensing module of the fishing sonar apparatus.

A3. The fishing sonar apparatus according to example enumerated embodiment A2, wherein the control unit is further configured to:
obtain a second set of instructions comprising one or more predefined criteria and transmit a signal, based on the first set of instructions and the second set of instructions, indicating the first type of bait to be dispensed in the one or more second location(s) wherein the sonar data associated with the one or more second location(s) comprising at least one characteristic of the one or more second location to be compared with the one or more criteria matches the one or more predefined criteria, to the bait-dispensing module of the fishing sonar apparatus.

A4. The fishing sonar apparatus according to any one of example enumerated embodiments A1 - A3, wherein the control unit is further configured to:

select, based on the first set of instructions and the second set of instructions, a second type of bait, which is different from the first type of bait and

transmit a signal, based on the first set of instructions and the second set of instructions, indicating the first type of bait to be dispensed in one selected second location of the one or more second location(s) and the second type of bait to be dispensed in one other second location of the one or more second location(s), to the bait-dispensing module of the fishing sonar apparatus.

A5. The fishing sonar apparatus according to any one of example enumerated embodiments A1- A4, wherein the control unit is further configured to obtain the first and the second set of instructions by retrieving the first and the second set of instructions from a memory of the fishing sonar apparatus and/or by receiving from a wireless device, a wireless signal comprising the first and the second set of instructions.

A6. The fishing sonar apparatus according to example enumerated embodiment A5, wherein the control unit is further configured to:
receive a signal from the wireless device, the signal comprising instructions from the wireless device for electing the one selected second location of the one or more second location(s) and/or one other selected second location of the one or more second location(s) and wherein the control unit is further configured to elect the one selected second location of the one or more second location(s) and/or one other selected second location of the one or more second location(s) based on the received instructions from the wireless device.

A7. A method performed by a fishing sonar apparatus for distribution of bait for fish, the method comprising:

- obtaining a first set of instructions comprising location data of a first location and sonar data associated with at least one sonar scan performed in the first location; and

- transmitting a signal, based on the first set of instructions, indicating a first type of bait to be dispensed in the first location, to a bait-dispensing module of the fishing sonar apparatus.

A8. The method according to example enumerated embodiment A7, wherein the first set of instructions further comprises location data of one or more second location(s) being substantially comprised in the first location and sonar data associated with at least one sonar scan performed in the one or more second location(s), the method further comprising:

- transmitting a signal, based on the first set of instructions, indicating the first type of bait to be dispensed in the one or more second location(s), to the bait-dispensing module of the fishing sonar apparatus.

A9. The method according to example enumerated embodiment A8, wherein the method further comprises:

- obtaining a second set of instructions comprising one or more predefined criteria;

- transmitting a signal, based on the first set of instructions and the second set of instructions, indicating the first type of bait to be dispensed in the one or more second location(s) if the sonar data associated with the one or more second location(s) comprising at least one characteristic of the one or more second location to be compared with the one or more criteria matches the one or more predefined criteria, to the bait-dispensing module of the fishing sonar apparatus.

A10. The method according to example enumerated embodiment A9, wherein the one or more predefined criteria comprises a set of characteristics, comprising any one of a predefined shape, a predefined size, a predefined water depth, a predefined water depth alteration profile, a predefined sea-bottom profile, a predefined species of fish, a temperature parameter of the water, a salinity parameter of the water, and a thermocline depth parameter of the water.

A11. The method according to any one of example enumerated embodiments A7 - A10, wherein the method further comprises:

- selecting, based on the first set of instructions and the second set of instructions, a second type of bait, which is different from the first type of bait;

- transmitting a signal, based on the first set of instructions and the second set of instructions, indicating the first type of bait to be dispensed in one selected second location of the one or more second location(s) and the second type of bait to be dispensed in one other second location of the one or more second location(s), to the bait-dispensing module of the fishing sonar apparatus.

A12. The method according to any one of example enumerated embodiments A7-A11, wherein obtaining the first and the second set of instructions comprises:

- retrieving the first and the second set of instructions from a memory of the fishing sonar apparatus and/or receiving from a wireless device, a wireless signal comprising the first and the second set of instructions.

A13. The method according to example enumerated embodiment A12, wherein the method further comprises:

- receiving a signal from the wireless device, the signal comprising instructions from the wireless device for electing one second location of the one or more identified second location(s) and/or one other second location of the one or more identified second location(s);

- electing the one second location of the one or more second location(s) and/or the one other second location of the one or more second location(s) based on the received instructions from the wireless device such that bait is dispensed in the elected locations.

A14. The method according to example enumerated embodiment A13, wherein the method further comprises:

- receiving instructions comprised in the signal received from the wireless device, wherein the instructions further comprise instructions for selecting the first and/or second type of bait and/or an amount of the first and the second type of bait to be dispensed in the one elected second location of the one or more identified second location(s) and/or in the one other elected second location of the one or more identified second location(s).

A15. A computer program carrier carrying one or more computer programs configured to be executed by one or more processors of a processing system comprised in a control unit, the one or more programs comprising instructions for performing the method according to any one of example enumerated embodiments A7 - A14, and wherein the computer program carrier is one of an electronic signal, optical signal, radio signal or a computer-readable storage medium.

A16. A computer program product comprising instructions which, when the program is executed by one or more processors of a processing system comprised in a control unit, causes the processing system to carry out the method according to any one of example enumerated embodiments A7 - A14.

A17. A vessel for scanning a body of water and distribution of bait for fish, the vessel comprising:

a perception system for monitoring a surrounding environment of the vessel such as the body of water;

a localization system configured to monitor a geographical position and heading of the vessel; and a fishing sonar apparatus according to any one of example enumerated embodiments A1 -A6.

B1. A fishing sonar apparatus for scanning a body of water, wherein the fishing sonar apparatus comprises a control unit configured to:

obtain a first set of instructions comprising location data of a first location;

obtain a second set of instructions comprising one or more predefined criteria;

perform at least one sonar scan in the first location by means of a sonar module comprised in the fishing sonar apparatus;

obtain sonar data associated with the at least one sonar scan in the first location, wherein the obtained sonar data comprises at least one characteristic of the first location to be compared with the one or more criteria; and

identify, based on the sonar data and the one or more predefined criteria, one or more second location(s)being substantially comprised in the first location, wherein the sonar data comprises sonar data associated with the one or more second location.

B2. The fishing sonar apparatus according to example enumerated embodiment B1, wherein the control unit is further configured to:

compare the obtained sonar data associated with the at least one sonar scan in the first location with the one or more predefined criteria; and

determine if the obtained sonar data of the one or more second location comprising at least one characteristic of the one or more second location to be compared with the one or more criteria matches the one or more predefined criteria, and if it is determined that the sonar data of the one or more second location matches the one or more predefined criteria, identify the one or more second location.

B3. The fishing sonar apparatus according to any one of example enumerated embodiments B1 or B2, wherein the control unit is further configured to:

determine if the sonar data of the one or more second location matches the one or more predefined criteria, by calculating a loss function comprising one or more similarity parameter indicative of an agreement between the at least one characteristic of the one or more second location and the one or more predefined criteria; and

if an output of the calculated loss function falls below a predetermined threshold value, identify the one or more second location.

B4. The fishing sonar apparatus according to any one of example enumerated embodiments BI- B3, wherein the control unit is further configured to obtain the first and the second set of instructions by retrieving the first and the second set of instructions from a memory of the fishing sonar apparatus and/or by receiving from a wireless device, a wireless signal comprising the first and the second set of instructions.

B5. The fishing sonar apparatus according to example enumerated embodiment B4, wherein the control unit is further configured to transmit at least one of the at least one sonar scan performed in the first and/or in the one or more second location, the sonar data associated with the at least one sonar scan performed in the first location and/or in the one or more second location(s), the identified one or more second location, and/or the at least one characteristics of the identified one or more second location(s) to the wireless device.

B6. The fishing sonar apparatus according to any one of example enumerated embodiments B1- B5, wherein the control unit is further configured to maneuver the vessel to the first location based on the obtained first set of instructions comprising the location data of the first location and instructions to maneuver the vessel to the first location.

B7. The fishing sonar apparatus according to any one of example enumerated embodiments B1 - B6, wherein the fishing sonar apparatus is comprised in a castable enclosure.

B8. A method performed by a fishing sonar apparatus for scanning a body of water, the method comprising:

- obtaining a first set of instructions comprising location data of a first location;

- obtaining a second set of instructions comprising one or more predefined criteria;

- performing at least one sonar scan in the first location by means of a sonar module comprised in the fishing sonar apparatus;

- obtaining sonar data associated with the at least one sonar scan in the first location; wherein the obtained sonar data comprises at least one characteristic of the first location to be compared with the one or more criteria; and

- identifying, based on the sonar data and the one or more predefined criteria, one or more second location(s) being substantially comprised in the first location, wherein the sonar data comprises sonar data associated with the one or more second location.

B9. The method according to example enumerated embodiment B8, wherein the identifying the second location comprises:

- comparing the obtained sonar data associated with the at least one sonar scan in the first location with the one or more predefined criteria;

- determining if the obtained sonar data associated with the one or more second location comprising at least one characteristic of the one or more second location to be compared with the one or more criteria matches the one or more predefined criteria, and if it is determined that the sonar data of the one or more second location matches the one or more predefined criteria, identifying the one or more second location.

B10. The method according to any one of example enumerated embodiments B8 or B9, wherein the one or more predefined criteria comprises a set of characteristics comprising any one of a predefined shape, a predefined size, a predefined water depth, a predefined water depth alteration profile, a predefined sea-bottom profile, a predefined species of fish, a temperature parameter of the water, a salinity parameter of the water, and a thermocline depth parameter of the water.

B11. The method according to any one of example enumerated embodiments B9 or B10, wherein the method further comprises:

- determining if the sonar data of the one or more second location matches the one or more predefined criteria, by calculating a loss function comprising one or more similarity parameter indicative of an agreement between the at least one characteristic of the one or more second location and the one or more predefined criteria; and

- if an output of the calculated loss function falls below a predetermined threshold value, identifying the one or more second location.

B12. The method according to any one of example enumerated embodiments B8 - B11, wherein obtaining the first and the second set of instructions comprises:

- retrieving the first and the second set of instructions from a memory of the fishing sonar apparatus and/or receiving from a wireless device, a wireless signal comprising the first and the second set of instructions.

B13. The method according to example enumerated embodiment B12, wherein the method further comprises:

- transmitting at least one of the at least one sonar scan performed in the first and/or in the one or more second location, the sonar data associated with the at least one sonar scan performed in the first and/or in the one or more second location, the identified one or more second location, and the at least one characteristic of the identified one or more second location to the wireless device.

B14. The method according to example enumerated embodiment B13, wherein the method further comprises:

- obtaining a transmit data request signal from the wireless device;

- transmitting at least one of the at least one sonar scan performed in the first and/or in the one or more second location, the sonar data associated with the at least one sonar scan performed in the first and/or in the one or more second location, the identified one or more second location, and the at least one characteristic of the identified one or more second location to the wireless device when receiving the transmit data request from the wireless device.

B15. The method according to any one of example enumerated embodiments B8 - B14, wherein the method further comprises:

- maneuvering the vessel to the first location based on the obtained first set of instructions comprising the location data of the first location and instructions to maneuver the vessel to the first location.

B16. The method according to any one of example enumerated embodiments B8 - B15, wherein the method further comprises:

- obtaining instructions for maneuvering the vessel to a selected second location of the one or more second locations;

- maneuvering the vessel to the selected second location of the one or more second locations so as to perform a suitable fishing activity in the selected second location.

B17. A computer program carrier carrying one or more computer programs configured to be executed by one or more processors of a processing system comprised in a control unit, the one or more programs comprising instructions for performing the method according to any one of example enumerated embodiments B8 - B16, and wherein the computer program carrier is one of an electronic signal, optical signal, radio signal or a computer-readable storage medium.

B18. A computer program product comprising instructions which, when the program is executed by one or more processors of a processing system comprised in a control unit, causes the processing system to carry out the method according to any one of example enumerated embodiments B8 - B16.

B19. A vessel for scanning a body of water, the vessel comprising:

> a perception system for monitoring a surrounding environment of the vessel such as the body of water;

> a localization system configured to monitor a geographical position and heading of the vessel; and a fishing sonar apparatus according to any one of example enumerated embodiments B1 - B6.

**Claims**

1. A fishing sonar apparatus (2) for distribution of bait (21a, 21b) for fish (25a, 25b, 25c), the fishing sonar apparatus comprising a control unit (4) and a bait-dispensing module (16); wherein the control unit is configured to:

> obtain a first set of instructions comprising location data of a first location (6) and sonar data associated with at least one sonar scan performed in the first location and
> transmit a signal, based on the first set of instructions, indicating a first type (21a) of bait to be dispensed in the first location, to the bait-dispensing module (16) of the fishing sonar apparatus.

2. The fishing sonar apparatus according to claim 1, wherein the first set of instructions further comprises location data of one or more second location(s) (61, 62) being substantially comprised in the first location and sonar data associated with at least one sonar scan performed in the one or more second location(s) and wherein the control unit is further configured to transmit a signal, based on the first set of instructions, indicating the first type (21a) of bait to be dispensed in the one or more second location(s), to the bait-dispensing module of the fishing sonar apparatus.

3. The fishing sonar apparatus according to claim 2, wherein the control unit is further configured to:

> obtain a second set of instructions comprising one or more predefined criteria and
> transmit a signal, based on the first set of instructions and the second set of instructions, indicating the first type (21a) of bait to be dispensed in the one or more second location(s) wherein the sonar data associated with the one or more second location(s) comprising at least one characteristic of the one or more second location to be compared with the one or more criteria matches the one or more predefined criteria, to the bait-dispensing module of the fishing sonar apparatus.

4. The fishing sonar apparatus according to any one of claims 1-3, wherein the control unit is further configured to:

> select, based on the first set of instructions and the second set of instructions, a second type (21b) of bait, which is different from the first type (21a) of bait and
> transmit a signal, based on the first set of instructions and the second set of instructions, indicating the first type (21a) of bait to be dispensed in one selected second location (61, 62) of the one or more second location(s) and the second type (21b) of bait to be dispensed in one other second location (61, 62) of the one or more second location(s), to the bait-dispensing module of the fishing sonar apparatus.

5. The fishing sonar apparatus according to any one of claims 1-4, wherein the control unit is further configured to obtain the first and the second set of instructions by retrieving said first and said second set of instructions from a memory of the fishing sonar apparatus and/or by receiving from a wireless device (9), a wireless signal (10) comprising said first and said second set of instructions.

6. A method performed by a fishing sonar apparatus for distribution of bait for fish , the method comprising:

> - obtaining a first set of instructions comprising location data of a first location and sonar data associated with at least one sonar scan performed in the first location; and
> - transmitting a signal, based on the first set of instructions, indicating a first type of bait to be dispensed in the first location, to a bait-dispensing module of the fishing sonar apparatus.

7. The method according to claim 6, wherein the first set of instructions further comprises location data of one or more second location(s) being substantially comprised in the first location and sonar data associated with at least one sonar scan performed in the one or more second location(s), the method further comprising:

> - transmitting a signal, based on the first set of instructions, indicating the first type of bait to be dispensed in the one or more second location(s) , to the bait-dispensing module of the fishing sonar apparatus.

8. The method according to claim 7, wherein the method further comprises:

   - obtaining a second set of instructions comprising one or more predefined criteria;
   - transmitting a signal, based on the first set of instructions and the second set of instructions, indicating the first type of bait to be dispensed in the one or more second location(s) if the sonar data associated with the one or more second location(s) comprising at least one characteristic of the one or more second location to be compared with the one or more criteria matches the one or more predefined criteria, to the bait-dispensing module of the fishing sonar apparatus.

9. The method according to claim 8, wherein the one or more predefined criteria comprises a set of characteristics, comprising any one of a predefined shape, a predefined size, a predefined water depth, a predefined water depth alteration profile, a predefined sea-bottom profile, a predefined species of fish, a temperature parameter of the water, a salinity parameter of the water, and a thermocline depth parameter of the water.

10. The method according to any one of claims 6 - 9, wherein the method further comprises:

    - selecting, based on the first set of instructions and the second set of instructions, a second type of bait, which is different from the first type of bait;
    - transmitting a signal, based on the first set of instructions and the second set of instructions, indicating the first type of bait to be dispensed in one selected second location of the one or more second location(s) and the second type of bait to be dispensed in one other second location of the one or more second location(s) , to the bait-dispensing module of the fishing sonar apparatus.

11. The method according to any one of claims 6 - 10, wherein obtaining the first and the second set of instructions comprises:

    - retrieving said first and said second set of instructions from a memory of the fishing sonar apparatus and/or receiving from a wireless device, a wireless signal comprising said first and said second set of instructions.

12. The method according to claim 11, wherein the method further comprises:

    - receiving a signal from the wireless device, the signal comprising instructions from the wireless device for electing one second location of the one or more identified second location(s) and/or one other second location of the one or more identified second location(s);
    - electing the one second location of the one or more second location(s) and/or the one other second location of the one or more second location(s) based on the received instructions from the wireless device such that bait is dispensed in the elected locations.

13. A computer program carrier carrying one or more computer programs configured to be executed by one or more processors of a processing system comprised in a control unit, the one or more programs comprising instructions for performing the method according to any one of claims 6 - 12, and wherein the computer program carrier is one of an electronic signal, optical signal, radio signal or a computer-readable storage medium.

14. A computer program product comprising instructions which, when the program is executed by one or more processors of a processing system comprised in a control unit, causes the processing system to carry out the method according to any one of claims 6 -12.

15. A vessel for scanning a body of water and distribution of bait (21a, 21b) for fish (25a, 25b, 25c), the vessel comprising:

    a perception system for monitoring a surrounding environment of the vessel such as the body of water;
    a localization system configured to monitor a geographical position and heading of the vessel; and
    a fishing sonar apparatus according to any one of claims 1-5.

FIG. 1

FIG. 2a

<u>202</u>                    <u>206</u>

210 —

Retrieve first and said
second set of instructions
from a memory of system

212 —

Receive first and said
second set of instructions
from a wireless device

# FIG. 2b

Receive instructions signal from the wireless
device                                                    —214

elect one selected second location and/or
one other selected second location of the one or          —216
more second location(s)

Select the first and/or second type of bait
and/or an amount of the first and the second              —218
type of bait

# FIG. 2c

FIG. 3

Europäisches
Patentamt

European
Patent Office

Office européen
des brevets

# EUROPEAN SEARCH REPORT

Application Number

EP 21 21 8358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 108 902 068 A (ANHUI XINSICHUANG TECH CO LTD) 30 November 2018 (2018-11-30) <br> * paragraphs [0007] - [0028], [0047] - [0052], [0061] - [0100] * <br> * paragraphs [0112] - [0119], [0123] - [0125], [0143] - [0148] * <br> * figures 1-5 * | 1-15 | INV. <br> A01K97/00 <br> A01K97/02 <br> G01S15/96 |
| X | US 2019/072951 A1 (CLARK JEREMIAH [US] ET AL) 7 March 2019 (2019-03-07) <br> * paragraphs [0005] - [0018], [0056] - [0059], [0068] - [0078], [0092] - [0102], [0113] - [0115], [0127] - [0154] * <br> * paragraphs [0170] - [0177], [0196] - [0199] * <br> * figures 1-2C, 3-15B * | 1-15 | |
| A | DE 20 2011 104213 U1 (SENKAYA CEMIL [DE]) 19 December 2011 (2011-12-19) <br> * paragraphs [0003] - [0007] * <br> * figure 1 * | 1-15 | |

TECHNICAL FIELDS
SEARCHED      (IPC)

A01K
G01S

The present search report has been drawn up for all claims

| Place of search | Date of completion of the search | Examiner |
|---|---|---|
| The Hague | 30 June 2022 | Been, Mathieu |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...............................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 21 8358

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2022

| Patent document cited in search report | | Publication date | Patent family member(s) | | Publication date |
|---|---|---|---|---|---|
| CN 108902068 | A | 30-11-2018 | NONE | | |
| US 2019072951 | A1 | 07-03-2019 | US 2019072951 A1 | | 07-03-2019 |
| | | | US 2020341463 A1 | | 29-10-2020 |
| DE 202011104213 | U1 | 19-12-2011 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20200363798 A